(19) Europäisches Patentamt / European Patent Office / Office européen des brevets

(11) **EP 3 693 415 A1**

(12) **EUROPEAN PATENT APPLICATION**
published in accordance with Art. 153(4) EPC

(43) Date of publication:
**12.08.2020 Bulletin 2020/33**

(51) Int Cl.:
*C09B 61/00* (2006.01)  *B01D 19/02* (2006.01)
*B01D 19/04* (2006.01)  *C09B 67/20* (2006.01)

(21) Application number: **18864665.7**

(22) Date of filing: **03.10.2018**

(86) International application number:
**PCT/JP2018/037073**

(87) International publication number:
**WO 2019/069992 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2017 JP 2017193948**

(71) Applicant: **San-Ei Gen F.F.I., INC.**
**Toyonaka-shi, Osaka 561-8588 (JP)**

(72) Inventors:
• **YOKOTA,Aki**
**Toyonaka-shi**
**Osaka 561-8588 (JP)**
• **HAMASAKI,Koji**
**Toyonaka-shi**
**Osaka 561-8588 (JP)**

(74) Representative: **Cabinet Beau de Loménie**
**158, rue de l'Université**
**75340 Paris Cedex 07 (FR)**

(54) **DEFOAMING AND/OR FOAM SUPPRESSING METHOD FOR NATURALLY DERIVED WATER SOLUBLE COLORANT OR SUBSTANCE INCLUDING SAME**

(57) The defoaming and/or foam suppression of a naturally derived water-soluble pigment is performed. Provided is a defoaming and/or foam suppression method comprising a step of bringing an emulsified oil/fat containing an emulsifier and an oil/fat into contact with the naturally derived water-soluble pigment or water-soluble pigment-containing substance. An emulsified oil/fat-containing preparation, a pigment preparation, and a pigment-containing composition for a defoaming and/or foam suppression method for a naturally derived water-soluble pigment or a water-soluble pigment-containing substance are also prepared.

[FIG. 1]

EP 3 693 415 A1

**Description**

Technical Field

The present invention relates to a defoaming and/or foam suppression method for a naturally derived water-soluble pigment or a substance containing the same, a method for producing a preparation, a pigment preparation, a colored composition and a food composition to be used for such a purpose.

Background Art

Conventionally, synthetic pigments and natural pigments (naturally derived pigments) have been widely used for coloring foods. Particularly in recent years, for their safe and healthy image, natural pigments are especially used. For example, spirulina blue is a naturally derived water-soluble bluish pigment that can color a target composition bright blue, and thus has been applied to foods and beverages.

As a technology related to a pigment preparation containing spirulina blue, PTL 1 proposes an aqueous pigment solution containing an algae-derived pigment, an alcohol, and water. PTL 2 proposes a powder pigment obtained by pulverizing a spirulina pigment to an average particle size of 3 to 8 $\mu$m. PTL 1 is a technology related to a pigment solution resistant to bacterial growth. In addition, PTL 2 relates to a technology in which a powder pigment is added in powder form to color a food or beverage.

Prior Art DocumentPatent Literature

PTL 1: JP-A-2004-231851
PTL 2: JP-A-2011-099105

Summary of Invention

Technical Problem

The invention addresses the problem of finding a defoaming and/or foam suppression method for a naturally derived water-soluble pigment or a water-soluble pigment-containing substance. A technology focusing on the defoaming and/or foam suppression of a naturally derived water-soluble pigment has not yet been found.

Solution to Problem

As a result of extensive research, the present inventors have found that when an emulsified oil/fat containing an emulsifier and an oil/fat is brought into contact with a naturally derived water-soluble pigment or a water-soluble pigment-containing substance, foam from the pigment can be reduced, or foaming can be suppressed. Based on such findings, the invention has been accomplished.
The invention encompasses the embodiments described in the following items.

Item 1. A defoaming and/or foam suppression method for a naturally derived water-soluble pigment or a water-soluble pigment-containing substance,
the method comprising a step of bringing an emulsified oil/fat containing an emulsifier and an oil/fat into contact with the naturally derived water-soluble pigment or water-soluble pigment-containing substance.
Item 2. The defoaming and/or foam suppression method according to item 1, wherein the naturally derived water-soluble pigment is an algae- or plant-derived water-soluble pigment.
Item 3. The defoaming and/or foam suppression method according to item 1 or 2, wherein the naturally derived water-soluble pigment is at least one member selected from the group consisting of spirulina blue, anthocyanin-based pigments, gardenia pigments, and monascus pigments.
Item 4. The defoaming and/or foam suppression method according to any one of items 1 to 3, wherein the emulsifier is a polysaccharide.
Item 5. The defoaming and/or foam suppression method according to any one of items 1 to 4, wherein the oil/fat contains a lipophilic flavoring agent.
Item 6. A preparation comprising an emulsified oil/fat, for the defoaming and/or foam suppression of a naturally derived water-soluble pigment or a water-soluble pigment-containing substance.

Item 7. The preparation according to item 6, wherein the emulsified oil/fat contains a polysaccharide.

Item 8. The preparation according to item 6 or 7, wherein the emulsified oil/fat contains a lipophilic flavoring agent.

Item 9. A pigment preparation comprising a naturally derived water-soluble pigment and an emulsified oil/fat.

Item 10. The pigment preparation according to item 9, wherein the emulsified oil/fat contains a polysaccharide.

Item 11. The pigment preparation according to item 9 or 10, wherein the emulsified oil/fat contains a lipophilic flavoring agent.

Item 12. A colored composition comprising a spirulina-derived pigment, an oil, and an emulsifier.

Item 13. A method for producing a colored composition containing a naturally derived water-soluble pigment, the method comprising a step of mixing the pigment preparation according to any one of items 9 to 11 with a raw material.

Effects of Invention

According to the method of the invention, a defoaming and/or foam suppression method for a naturally derived water-soluble pigment or a water-soluble pigment-containing substance is provided.

Brief Description of Drawings

[Fig. 1] Fig. 1 is a photograph showing the results of Comparative Example 2 (Control) in Test Example 2 of the invention.

[Fig. 2] Fig. 2 is a photograph showing the results of Example 7 in Test Example 2 of the invention.

Description of Embodiments

The invention provides: a defoaming and/or foam suppression method for a naturally derived water-soluble pigment or a water-soluble pigment-containing substance;

a preparation containing an emulsified oil/fat for the defoaming and/or foam suppression of a naturally derived water-soluble pigment or a water-soluble pigment-containing substance;

a pigment preparation containing a naturally derived water-soluble pigment and an emulsified oil/fat;

a colored composition containing a spirulina-derived pigment, an oil, and an emulsifier; and

a method for producing a colored composition containing a naturally derived water-soluble pigment, etc.

Hereinafter, the invention will be described in detail.

As used herein, the term "comprising" means containing the component together with other components, but is also used with the intention to encompass the terms "consisting essentially of" and "consisting of".

Unless otherwise limited, the steps, treatments, and operations described herein can be performed at room temperature. As used herein, "room temperature" means a temperature within a range of 10 to 40°C.

As used herein, as commonly understood by one of ordinary skill in the art in the field of pigments, the term "color value" is a numerical value that indicates the concentration of a pigment. A "color value" is expressed as a numerical value ($E^{10\%}_{1\,cm}$) obtained by measuring the absorbance of a pigment preparation or a pigment-containing composition, at the maximum absorption wavelength in the visible region and converting the same into the absorbance of a 10 w/v% solution.

In the invention, the color value is a numerical value determined in accordance with Japan's Specifications and Standards for Food Additives, 8th Edition, "17. Color Value Measurement Method" in "B. GENERAL TEST" and also "C. MONOGRAPHS". For example, the value is determined by the following method.

(1) A test liquid is prepared such that the measured absorbance falls within a range of 0.3 to 0.7. In the invention, the test liquid is prepared as follows. A precisely measured amount of sample is placed in a measuring flask, and a separately specified solvent is added thereto to accurately make 100 mL. Here, when precipitation or the like is observed, such a test liquid is centrifuged, and the resulting supernatant is filtrated and used as a sample solution. In addition, in the case where a sample having a color value of 100 or more is used, the test liquid is diluted with a solvent as necessary such that the measured absorbance falls within a range of 0.3 to 0.7. Then, the dilution is used as a test liquid and subjected to the measurement.

(2) With respect to the solvent used to prepare the test liquid, at the separately specified wavelength at a liquid layer length of 1 cm, the absorbance A at the maximum absorption wavelength is measured, and the color value ($E^{10\%}_{1\,cm}$) to be measured is determined by the following formula.

$$\text{Color value } (E^{10\%}_{1\ cm}) = A \times 10/\text{the amount of sample contained in 100 ml of the test liquid subjected to the measurement (g)}$$

The "separately specified solvent" and "separately specified wavelength" prescribed in the "17. Color Value Measurement Method" are prescribed in Japan's Specifications and Standards for Food Additives, 8th Edition, "C. MONOGRAPHS", which may be referenced as necessary. In addition, in the case where a test liquid preparation method is prescribed in Japan's Specifications and Standards for Food Additives, 8th Edition, "C. MONOGRAPHS", preparation can be performed in accordance with such prescription.

For reference, Table 1 shows the solvent used for each naturally derived water-soluble pigment and also the measurement wavelengths. A color value is a value widely used in the art and, as described above, can be calculated using common knowledge in the art. Note that the water-soluble pigment of the invention does not cause precipitation as a result of being dissolved in such a solvent, and precipitation, if any, is caused by a factor that is irrelevant to the pigment.

[Table 1]

| Pigment | Solvent | Wavelength |
|---|---|---|
| Spirulina blue | Citric acid buffer (pH 6.0) | 610 to 630 nm |
| Anthocyanin-based pigment | Citric acid buffer (pH 3.0) | 500 to 540 nm |
| Gardenia red | Citric acid buffer (pH 4.0) | 520 to 545 nm |
| Gardenia blue | Citric acid buffer (pH 7.0) | 570 to 610 nm |
| Monascus pigment | Water/ethanol mixture (1:1) | 450 to 520 nm |

In the invention, calculation in terms of color value means to calculate a pigment in terms of numerical value per color value.

Therefore, 1 part by mass in terms of a color value of 100 has the same meaning as 0.5 parts by mass in terms of a color value of 200 and 2 parts by mass in terms of a color value of 50.

[Naturally Derived Water-Soluble Pigment]

Naturally derived water-soluble pigments in the invention are water-soluble pigments derived from natural products, particularly those obtained by heat-treating a saccharide and those derived from algae or plants, and may be hereinafter sometimes simply referred to as water-soluble pigments. "Derived" means that the pigment is obtained by solvent extraction from algae or plants, for example. Examples of such water-soluble pigments include, but are not limited to:

algae-derived pigments such as spirulina blue;
anthocyanin-based pigments such as purple sweet potato pigment, red cabbage pigment, red radish pigment, red rice pigment, purple corn pigment, purple yam pigment, berry pigment, perilla pigment, cherry pigment, hibiscus pigment, grape juice pigment, grape skin pigment, black currant pigment, plum pigment, and red currant pigment;
gardenia pigments such as gardenia yellow, gardenia red, and gardenia blue;
water-soluble annatto pigment;
monascus pigments such as monascus red and monascus yellow;
carthamus pigments such as carthamus yellow and carthamus red;
red beet pigment;
flavonoid-based (polymer) pigments such as cacao pigment, Japanese persimmon pigment, and tamarind pigment;
quinone-based pigments such as cochineal extracts and lac pigment; and
kaoliang pigment.

Among them, at least one pigment selected from the group consisting of spirulina blue, anthocyanin-based pigments, gardenia-based pigments, and monascus pigments is prone to foaming. In particular, spirulina blue or an anthocyanin-based pigment, especially spirulina blue, is notably prone to foaming, and thus is a typical example of the naturally derived water-soluble pigment in the invention.

Spirulina blue is a pigment derived from the genus Spirulina and is a pigment composition containing phycocyanin as a main component. Spirulina blue can be acquired by, for example, extracting whole spirulina algae (Spirulina platensis Geitler) with water at room temperature, or it is also possible to u-se a commercially available product. The maximum absorption wavelength of spirulina blue is usually within a range of 610 to 630 nm. Such spirulina blue is preferable as a naturally derived water-soluble blue pigment and advantageous in that the target composition can be colored bright blue, but meanwhile has a problem of being notably prone to foaming.

In the invention, the naturally derived water-soluble pigment or the water-soluble pigment-containing substance is typically provided as a solid composition containing a water-soluble pigment. Such a solid composition is obtained by subjecting a water-soluble pigment extract, which is produced from a natural product by extraction or the like, to a drying treatment. The drying treatment may specifically be a drying treatment by a spray-drying method, a vacuum-drying method, a freeze-drying method, or the like, for example. The shape of the solid composition can be, but is not limited to, powder form, granular form, tablet form, or the like. The solid composition may contain, as fillers and/or diluents, saccharides (e.g., monosaccharides such as glucose, galactose, and fructose; disaccharides such as trehalose, sucrose, lactose, and maltose; oligosaccharide, starch syrup, dextrin, cyclodextrin, etc.), sugar alcohols (e.g., sorbitol, mannitol, xylitol, erythritol, maltitol, etc.), citrates, and the like.

In the invention, the naturally derived water-soluble pigment or the water-soluble pigment-containing substance may also be provided in the form of a liquid material containing a water-soluble pigment. Here, the liquid contained in the liquid material may be water, a lower alcohol (ethanol, etc.), or a like aqueous solvent. Further, it is also possible to contain, as fillers and/or diluents, saccharides (e.g., monosaccharides such as glucose, galactose, and fructose; disaccharides such as trehalose, sucrose, lactose, and maltose; oligosaccharide, starch syrup, dextrin, cyclodextrin, etc.), sugar alcohols (e.g., sorbitol, mannitol, xylitol, erythritol, maltitol, etc.), polyhydric alcohols (glycerin, propylene glycol, 1,3-butylene glycol, sorbitol, etc.), citrates, and the like.

[Emulsified Oil/Fat]

The emulsified oil/fat used in the invention refers to a composition prepared by emulsifying an oil/fat (oil component).

Here, examples of oils/fats include milk fats such as butter and fresh cream, animal oils/fats such as beef fat, lard, and chicken fat, and various vegetable oils/fats, as well as fractions, hydrogenated oils/fats, and interesterified oils/fats thereof. They may be used alone, and it is also possible to use two or more kinds together.

As the oil/fat of the invention, an oil/fat that is liquid at ordinary temperature can be preferably used. As such oils/fats that are liquid at ordinary temperature, vegetable oils/fats can be mentioned. Examples of vegetable oils/fats include salad oil, refined oil, corn oil, soybean oil, sesame oil, rapeseed oil (canola oil), rice oil (rice bran oil), bran oil, camellia oil, safflower oil, palm oil, palm kernel oil, coconut oil, cotton seed oil, sunflower oil, sesame oil (perilla oil), linseed oil, olive oil, peanut oil, almond oil, avocado oil, hazelnut oil, walnut oil, grape seed oil, mustard oil, lettuce oil, and lipophilic flavoring agent compounds (e.g., orange oil, grapefruit oil, lemon oil, lime oil, essential oils such as peppermint, spearmint and mint). In addition, as an oil/fat that is liquid at ordinary temperature, medium-chain triglyceride (MCT) can be mentioned. In the invention, they may be used alone, and it is also possible to use two or more kinds together.

As the oil/fat of the invention, a particularly preferred oil/fat (oil component) is at least one member selected from vegetable oils/fats, medium-chain triglyceride (MCT), and lipophilic flavoring agents.

In the emulsified oil/fat of the invention, an emulsifier is further blended.

Specific examples of emulsifiers include
fatty acid esters such as glycerine fatty acid esters, sucrose fatty acid esters, and sorbitan fatty acid esters;
phospholipids such as lecithin, enzymatically decomposed lecithin, and enzymatically modified lecithin; saponins such as quillaja extract, enju saponin, soybean saponin, enzymatically modified soybean saponin, saponin in tea seed, and yucca foam extract;
nonionic surfactants such as polysorbates (polysorbates 20, 60, 65, and 80);
polysaccharides such as gum arabic, gum ghatti, and modified starches; and
phosphoproteins such as sodium caseinate.

Incidentally, they may be used alone, and it is also possible to use an arbitrary combination of two or more kinds.

In the invention, preferred examples of emulsifiers include glycerine fatty acid esters, sucrose fatty acid esters, phospholipids, gum arabic, gum ghatti, modified starches, and a combination of two or more kinds thereof.

In the invention, more preferred examples of emulsifiers include glycerine fatty acid esters, sucrose fatty acid esters, gum arabic, gum ghatti, modified starches, and a combination of two or more kinds thereof, still more preferred examples include gum arabic, gum ghatti, modified starches, and at least one of them, and yet more preferred examples include gum arabic, gum ghatti, and a combination of two or more kinds thereof.

As the glycerine fatty acid esters and sucrose fatty acid esters, high-HLB esters, specifically those having a HLB of 10 or more, are desirable. For example, those having a HLB of 10 to 16 can be mentioned.

As preferred glycerine fatty acid esters, for example, $C_{12-22}$ polyglyceryl fatty acid esters having a polymerization degree of 5 or more can be mentioned. Specific examples thereof include decaglyceryl laurate, decaglyceryl myristate, decaglyceryl palmitate, decaglyceryl stearate, decaglyceryl oleate, decaglyceryl linoleate, decaglyceryl linolenate, decaglyceryl arachidate, decaglyceryl eicosenoate, and decaglyceryl behenate.

As sucrose fatty acid esters, specifically, sucrose monolaurate, sucrose monomyristate, sucrose monopalmitate, sucrose monostearate, and sucrose monooleate can be mentioned.

As preferred phospholipids, vegetable lecithin, enzymatically modified lecithin, enzymatically decomposed lecithin, fractionated lecithin, and yolk lecithin can be mentioned.

As preferred saponins, saponins such as quillaja extract, enju saponin, soybean saponin, enzymatically modified soybean saponin, saponin in tea seed, and yucca foam extract can be mentioned.

As polysorbates, specifically, polysorbate 20, polysorbate 60, polysorbate 65, and polysorbate 80 are known, and they are also commercially available. In the invention, these polysorbates may be used alone, and it is also possible to use a combination of two or more kinds.

As preferred polysaccharides, gum arabic, gum ghatti, modified starches, alginic acid, carrageenan, xanthan gum, guar gum, and pectin can be mentioned.

Modified starches used in the invention are obtained by physically, enzymatically, or chemically modifying the raw material starch derived from corn, potato, sweet potato, wheat, rice, glutinous rice, tapioca, sago palm, or the like. Modified starches obtained by chemical modification are preferable.

As examples of modified starches usable in the invention, acetylated distarch adipate, acetylated oxidized starch, acetylated distarch phosphate, oxidized starch, hydroxypropyl starch, hydroxypropyl distarch phosphate, carboxymethyl starch, starch acetate, starch octenylsuccinate, starch phosphorate, distarch phosphate, and phosphated distarch phosphate can be mentioned. Hydroxypropyl starch, hydroxypropyl distarch phosphate, and starch octenylsuccinate are preferable, and starch octenylsuccinate is more preferable. These modified starches may be used alone, and it is also possible to use a mixture of two or more kinds.

The emulsified oil/fat used in the invention is prepared by emulsifying the above oil/fat. The emulsified oil/fat may be provided in the form of any of water-in-oil type, oil-in-water type, water-in-oil-in-water type, and oil-in-water-in oil type.

For example, the weight ratio between the oil/fat content and the emulsifier content in the emulsified oil/fat is usually such that the emulsifier content per part by mass of the oil/fat is within a range of 0.01 to 50 parts by mass, preferably within a range of 0.05 to 40 parts by mass, still more preferably within a range of 0.1 to 30 parts by mass, yet more preferably within a range of 0.2 to 30 parts by mass, particularly preferably within a range of 0.3 to 30 parts by mass, more particularly preferably within a range of 0.3 to 20 parts by mass, and most preferably within a range of 0.3 to 10 parts by mass.

The emulsified oil/fat used in the invention can be provided in the emulsion of an oil-in-water type, for example, that is, provided in such a state that an oil/fat, an emulsifier, an aqueous media such as water, and other components are mixed and emulsified. The emulsifier may be added to the water phase or the oil phase, but is preferably previously added to the water phase. The emulsification treatment is not particularly limited and can be performed using a homomixer, a high-pressure homogenizer, or the like. In this emulsification step, the median size of oil droplets can be adjusted. In addition, as a step before or after the emulsification, a pasteurization or sterilization treatment can be performed.

[Preparation Containing Emulsified Oil/Fat for Defoaming and/or Foam Suppression of Naturally Derived Water-Soluble Pigment or Water-Soluble Pigment-Containing Substance]

In the invention, a preparation containing an emulsified oil/fat for the defoaming and/or foam suppression of a naturally derived water-soluble pigment or a water-soluble pigment-containing substance can also be prepared. The preparation containing an emulsified oil/fat (emulsified oil/fat-containing preparation) may be in solid form or liquid form, and can usually be in the form of an oil-in-water emulsion or a water-dispersible preparation powder. The emulsified oil/fat-containing preparation can be typically provided as a solid composition. Such a solid composition can be obtained by subjecting a liquid material containing an emulsified oil/fat to a drying treatment. The drying treatment may specifically be a drying treatment by a spray-drying method, a vacuum-drying method, a freeze-drying method, or the like, for example. The shape of the solid composition can be, but is not limited to, powder form, granular form, tablet form, or the like. The solid composition may contain, as fillers and/or diluents, saccharides (e.g., monosaccharides such as glucose, galactose, and fructose; disaccharides such as trehalose, sucrose, lactose, and maltose; oligosaccharide, starch syrup, dextrin, cyclodextrin, etc.), sugar alcohols (e.g., sorbitol, mannitol, xylitol, erythritol, maltitol, etc.), citrates, and the like.

In the invention, the emulsified oil/fat-containing preparation can also be provided in the form of a liquid material.

Here, the liquid contained in the liquid material may be water, a lower alcohol (ethanol, etc.), or a like aqueous solvent. Further, it is also possible to contain, as fillers and/or diluents, saccharides (e.g., monosaccharides such as glucose, galactose, and fructose; disaccharides such as trehalose, sucrose, lactose, and maltose; oligosaccharide, starch syrup, dextrin, cyclodextrin, etc.), sugar alcohols (e.g., sorbitol, mannitol, xylitol, erythritol, maltitol, etc.), polyhydric alcohols (glycerin, propylene glycol, 1,3-butylene glycol, sorbitol, etc.), citrates, and the like.

Further, a lubricant can also be used in the emulsified oil/fat-containing preparation of the invention. Specific examples of usable lubricants include calcium stearate, magnesium stearate, talc, hydrogenated oils (e.g., hydrogenated rapeseed oil, etc.), beeswax, sucrose fatty acid esters, polyglycerin fatty acid esters, sodium stearyl fumarate, calcium silicate, magnesium silicate, silicon dioxide, silica hydrogel, leucine, isoleucine, and polyethylene glycol.

As components contained in the emulsified oil/fat-containing preparation other than the oil/fat and the emulsifier, like this, commonly used various materials, additives, and the like can be mentioned. In the invention, food materials and food additives are particularly preferable.

The total content of components other than the emulsifier and the oil/fat in the emulsified oil/fat-containing preparation is not particularly limited, but the content is preferably 10 to 95 mass%, more preferably 30 to 70 mass%, and still more preferably 40 to 60 mass%. The emulsified oil/fat-containing preparation of the invention may be 100% an emulsified oil/fat, that is, may be a preparation composed only of an emulsifier and an oil/fat. Particularly in the case where the emulsified oil/fat-containing preparation is provided as a solid substance such as a powder or granules, the preparation can be 100% an emulsified oil/fat.

Although the oil/fat content in the emulsified oil/fat-containing preparation is not particularly limited, based on the total amount of the emulsified oil/fat-containing preparation, the blending amount is preferably within a range of 0.5 to 40 mass%, for example, more preferably within a range of 1 to 30 mass%, still more preferably within a range of 1 to 25 mass%, and yet more preferably within a range of 2 to 20 mass%.

Although the emulsifier content in the emulsified oil/fat-containing preparation of the invention is not particularly limited, based on the total amount of the emulsified oil/fat-containing preparation, the blending amount is preferably within a range of 0.5 to 50 mass%, for example, more preferably within a range of 1 to 40 mass%, still more preferably within a range of 1 to 35 mass%, and yet more preferably within a range of 2 to 30 mass%.

In addition, with respect to the emulsifier amount in the emulsified oil/fat-containing preparation, although this depends on the emulsifier used, in the case of a polysaccharide, for example, the dry weight of the polysaccharide based on the total amount of the emulsified oil/fat-containing preparation is preferably within a range of 50 mass% or less, more preferably within a range of 45 mass% or less, still more preferably within a range of 40 mass% or less, and particularly preferably within a range of 35 mass% or less. In the case of using a polysaccharide as an emulsifier, the total dry weight of the polysaccharide based on the total amount of the emulsified oil/fat-containing preparation may usually be within a range of 0.5 to 50 mass%, preferably 1 to 45 mass%, more preferably 3 to 40 mass%, and still more preferably 5 to 35 mass%.

In the case of using gum arabic as an emulsifier, the amount may usually be, based on the total amount of the emulsified oil/fat-containing preparation of the invention, within a range of 1 to 50 mass%, preferably 3 to 40 mass%, more preferably 5 to 35 mass%, and still more preferably 10 to 35 mass%.

In addition, for example, in the case of using gum ghatti as an emulsifier, the amount may usually be, based on the total amount of the emulsified oil/fat-containing preparation of the invention, within a range of 0.5 to 30 mass%, preferably 1 to 25 mass%, more preferably 1 to 20 mass%, and still more preferably 1 to 15 mass%.

In addition, for example, in the case of using a modified starch as an emulsifier, the amount may usually be, based on the total amount of the emulsified oil/fat-containing preparation of the invention, within a range of 1 to 50 mass%, preferably 3 to 40 mass%, more preferably 5 to 35 mass%, and still more preferably 10 to 35 mass%.

Here, similarly to the above, the weight ratio between the oil/fat content and the emulsifier content in the emulsified oil/fat in the preparation containing an emulsified oil/fat is also usually such that the emulsifier content per part by mass of the oil/fat is within a range of 0.01 to 50 parts by mass, preferably within a range of 0.05 to 40 parts by mass, still more preferably within a range of 0 .1 to 30 parts by mass, yet more preferably within a range of 0.2 to 30 parts by mass, particularly preferably within a range of 0.3 to 30 parts by mass, more particularly preferably within a range of 0.3 to 20 parts by mass, and most preferably within a range of 0.3 to 10 parts by mass.

[Pigment Preparation Containing Naturally Derived Water-Soluble Pigment and Emulsified Oil/Fat]

The pigment preparation of the invention contains a naturally derived water-soluble pigment and an emulsified oil/fat. The pigment preparation containing a water-soluble pigment and an emulsified oil/fat may be in solid form or liquid form. In addition to the water-soluble pigment, oil/fat, and emulsifier, the pigment preparation may also contain other components (fillers, diluents, lubricants. etc.). As other components, the components mentioned as examples for the emulsified oil/fat-containing preparation can also be mentioned. In particular, propylene glycol, carbohydrates, salts such as phosphates, and also various materials, additives, and the like can be mentioned. In the invention, food materials and food additives are particularly preferable.

The water-soluble pigment content in the pigment preparation of the invention is not particularly limited, but the color value of the pigment preparation is preferably within a range of 10 to 1,000, more preferably 20 to 800, and still more preferably within a range of 50 to 500.

The emulsified oil/fat content in the pigment preparation of the invention is not particularly limited. However, as the oil/fat amount, the preferred content is 0.0005 to 20 mass% based on the entire pigment preparation, more preferably 0.001 to 15 mass%, still more preferably 0.005 to 12 mass%, and particularly preferably 0.01 to 10 mass%.

The emulsified oil/fat content in the pigment preparation of the invention is not particularly limited. However, as the emulsifier amount, the preferred content is 0.001 to 20 mass% based on the entire pigment preparation, more preferably 0.005 to 15 mass%, still more preferably 0.01 to 13 mass%, and particularly preferably 0.01 to 10 mass%.

As long as the effect of the invention is not significantly impaired, the pigment preparation of the invention may also contain other components, that is, additional active components other than the water-soluble pigment, emulsified oil/fat, fillers, diluents, and lubricants described above. As additional components, antioxidants, chelating agents, flavoring agents, spice extracts, pH adjusters, preservatives, and the like can be mentioned.

The total content of components other than the water-soluble pigment, emulsifier, and oil/fat in the pigment preparation is not particularly limited, but the content is preferably 10 to 95 mass%, more preferably 20 to 85 mass%, still more preferably 30 to 70 mass%, and yet more preferably 40 to 60 mass%.

Here, similarly to the above, the weight ratio between the oil/fat content and the emulsifier content in the emulsified oil/fat in the pigment preparation is also usually such that the emulsifier content per part by mass of the oil/fat is within a range of 0. 01 to 50 parts by mass, preferably within a range of 0.05 to 40 parts by mass, still more preferably within a range of 0.1 to 30 parts by mass, yet more preferably within a range of 0.2 to 30 parts by mass, particularly preferably within a range of 0.3 to 30 parts by mass, more particularly preferably within a range of 0.3 to 20 parts by mass, and most preferably within a range of 0.3 to 10 parts by mass.

[Defoaming and/or Foam Suppression Method for Naturally Derived Water-Soluble Pigment or Water-Soluble Pigment-Containing Substance]

In the invention, "defoaming of a naturally derived water-soluble pigment or a water-soluble pigment-containing substance" has the following meaning: for example, with respect to foaming that occurs when a naturally derived water-soluble pigment in solid form, such as powder form or granular form, is dissolved in an aqueous solvent, the expression encompasses that after the generation of foam, the foam is completely eliminated, and also that the number of bubbles or the size is reduced.

In the invention, "defoaming of a naturally derived water-soluble pigment or a water-soluble pigment-containing substance" also has the following meaning: for example, with respect to foaming that occurs when a naturally derived water-soluble pigment in the form of a liquid material is further mixed with other components, or with respect to foaming that occurs when a naturally derived water-soluble pigment in the form of a liquid material is stirred, shaken, or bubbled, for example, the expression encompasses that after the generation of foam, the foam is eliminated, and also that the number of bubbles or the size is reduced.

"Defoaming" in the invention encompasses, but is not limited to, the case where, for example, as measured by the method described in the Examples, the reduction percentage of the generated foam as compared to non-treated conditions is preferably 20% or more, more preferably 30% or more, still more preferably 40% or more, and yet more preferably 50% or more, for example. That is, taking the foam generated under non-treated conditions as 100%, the term means that the generated foam is preferably less than 80%, more preferably less than 70%, still more preferably less than 60%, and yet more preferably less than 50%.

In the invention, "foam suppression of a naturally derived water-soluble pigment or a water-soluble pigment-containing substance" encompasses, for example, suppressing foaming that occurs when a naturally derived water-soluble pigment in solid form, such as powder form or granular form, is dissolved in an aqueous solvent.

In the invention, "foam suppression of a naturally derived water-soluble pigment or a water-soluble pigment-containing substance" encompasses, for example, suppressing foaming that occurs when a naturally derived water-soluble pigment in the form of a liquid material is further mixed with other components, or foaming that occurs when a naturally derived water-soluble pigment in the form of a liquid material is stirred, shaken, or bubbled, for example.

"Suppression" means that foaming is reduced as compared to the case of no treatment. Therefore, the term encompasses that foaming is completely inhibited before the generation of foam, and also that the degree of foam generation is reduced.

Here, "water-soluble pigment-containing substance" encompasses a solid composition containing a diluent or a filler in addition to a water-soluble pigment. "Water-soluble pigment-containing substance" also encompasses various embodiments containing water-soluble pigment, such as a liquid mixture of a water-soluble pigment and an aqueous solvent.

In the invention, the defoaming and/or foam suppression method includes a step of bringing an emulsified oil/fat into contact with a water-soluble pigment or a water-soluble pigment-containing substance. Incidentally, here, the emulsified oil/fat can be provided directly in the form of an emulsified oil/fat, and can also be provided in the form of an emulsified oil/fat-containing preparation or in the form of a pigment preparation that has been integrated with a pigment from the beginning. That is, the "step of bringing an emulsified oil/fat into contact" herein includes any of the above cases.

The contact step is not particularly limited. For the purpose of defoaming, for example, it is possible that an emulsified oil/fat is directly, or after diluted, sprayed to or mixed with foam that has already been generated in a liquid material containing a water-soluble pigment. In the case of mixing, the emulsified oil/fat may be mixed in liquid form or solid form such as a powder.

Contact for the purpose of foam suppression can be achieved by, but is not limited to, previously preparing a liquid material containing a water-soluble pigment and an emulsified oil/fat, or by separately preparing a liquid material containing a water-soluble pigment and a liquid emulsion containing an emulsified oil/fat and mixing the two, for example.

Contact for the purpose of foam suppression can also be achieved by, but is not limited to, previously preparing a solid material containing a water-soluble pigment and an emulsified oil/fat, or by separately preparing a solid (e.g., a powder, granules, etc.) containing a water-soluble pigment and a solid (e.g., a powder, granules, etc.) containing an emulsified oil/fat and mixing the two, for example. That is, when an emulsified oil/fat and a water-soluble pigment are previously mixed in this manner, foaming that occurs in the subsequent step of dissolution in an aqueous medium can be suppressed.

When an emulsified oil/fat is directly, or after diluted, sprayed to foam that has already been generated in a liquid material containing a water-soluble pigment, the method for spraying is not particularly limited, and a spraying method using an ordinary atomizer, for example, is employed.

The method for mixing a water-soluble pigment or a water-soluble pigment-containing substance with an emulsified oil/fat is not particularly limited as long as the method allows for mixing such that the water-soluble pigment or water-soluble pigment mixture and the emulsified oil/fat can come into contact, and a known mixing method may be employed.

In one preferred embodiment of the invention, mixing is not particularly limited as long as it is a method for mixing a powder or granules, and a known mixing method may be employed. In another embodiment of the invention, it is also possible that after the mixing, as required, the resulting mixture is dispersed in a medium (preferably an aqueous medium).

In one preferred embodiment of the invention, mixing can be performed in an aqueous medium. The mixing method is not particularly limited, and a known mixing method may be employed. In another embodiment of the invention, it is also possible that after the mixing, as required, the resulting mixture is dispersed in a medium (preferably an aqueous medium).

Examples of such media include water, lower alcohols, polyhydric alcohols, and mixtures of two or more kinds thereof, and other components may further be contained. A preferred example of the medium may be water, a polyhydric alcohol, a mixture of water and a polyhydric alcohol and liquid containing an other components, or the like.

Examples of polyhydric alcohols include glycerin, diglycerin, triglycerin, polyglycerin, propylene glycol, dipropylene glycol, 1,3-butylene glycol, ethylene glycol, polyethylene glycol, sorbitol, xylitol, maltitol, erythritol, and mannitol and the like.

Examples of usable lower alcohols include methanol, ethanol, propyl alcohol, isopropyl alcohol, butyl alcohol, sec-butyl alcohol, isobutyl alcohol, and like $C_{1-4}$ lower alcohols. They may be used alone, and it is also possible to use an arbitrary combination of two or more kinds. Preferred examples thereof include ethanol.

In the defoaming and/or foam suppression method of the invention, in the case where a water-soluble pigment and an emulsified oil/fat are mixed, the emulsified oil/fat proportion per 100 parts by mass of the water-soluble pigment (in terms of a color value of 100) is, as the dry mass of the emulsified oil/fat, within a range of 0.001 to 30 parts by mass, for example, preferably within a range of 0.005 to 25 parts by mass, and more preferably within a range of 0.01 to 20 parts by mass.

In addition, in the defoaming and/or foam suppression method of the invention, in the case where a water-soluble pigment and an emulsified oil/fat are mixed, it is desirable that the emulsified oil/fat is added such that the oil/fat proportion per 100 parts by mass of the water-soluble pigment (in terms of a color value of 100) is within a range of 0.0005 to 15 parts by mass, for example, preferably within a range of 0.001 to 12 parts by mass, and more preferably within a range of 0.005 to 10 parts by mass.

In addition, in the defoaming and/or foam suppression method of the invention, in the case where a water-soluble pigment and an emulsified oil/fat are mixed, it is desirable that the emulsified oil/fat is added such that the emulsifier proportion per 100 parts by mass of the water-soluble pigment (in terms of a color value of 100) is within a range of 0.001 to 20 parts by mass, for example, preferably within a range of 0.002 to 15 parts by mass, and more preferably within a range of 0.003 to 12 parts by mass.

In the defoaming and/or foam suppression method of the invention, in the case where the emulsified oil/fat is sprayed, the concentration of an aqueous emulsified oil/fat solution (emulsified oil/fat suspension) used for spraying is 0.1 ppb to 5%, for example, preferably 0.5 ppb to 3%, and more preferably 1 ppb to 1%.

In addition, in the defoaming and/or foam suppression method of the invention, in the case where the emulsified oil/fat is sprayed, it is desirable that the aqueous emulsified oil/fat solution (emulsified oil/fat suspension) is prepared such that the oil/fat concentration in the emulsified oil/fat-containing aqueous solution used for spraying is within a range of 0.1 ppb to 2%, for example, preferably 0.2 ppb to 1%, and more preferably 0.5 ppb to 0.5%.

In addition, in the defoaming and/or foam suppression method of the invention, in the case where an emulsified oil/fat is sprayed, it is desirable that the aqueous emulsified oil/fat solution (emulsified oil/fat suspension) is prepared such that the emulsifier concentration in the emulsified oil/fat-containing aqueous solution used for spraying is within a range of 1 ppb to 2%, for example, preferably 0.5 ppb to 1%, and more preferably 1 ppb to 0.5%.

The time of contact with a water-soluble pigment or a water-soluble pigment-containing substance in the defoaming method is not particularly limited, but is usually 1 second or more. There is no particular upper limit on the contact time. After the contact treatment, without any particular complicated step, such as removing the emulsified oil/fat, the treated additives can be directly subjected to the subsequent step. As the contact treatment for defoaming, even a treatment for about 3 minutes is sufficient. Incidentally, it is particularly preferable that an emulsified oil/fat-containing substance is sprayed to the foam generated in a water-soluble pigment or a water-soluble pigment-containing substance.

The time of contact with a water-soluble pigment or a water-soluble pigment-containing substance for foam suppression is not particularly limited, but is usually 1 second or more, preferably 30 seconds or more. There is no particular upper limit.

[Colored Composition]

In the invention, the composition to be colored is not particularly limited, and examples thereof include various compositions such as food and beverage compositions, perfumery and cosmetics, pharmaceuticals, quasi drugs, commodities, inks, and animal feeds. In one preferred embodiment of the invention, the composition is a food or beverage composition.

Examples of food and beverage compositions include beverages such as beverages and alcoholic beverages; confectionaries such as frozen desserts (e.g., ice pops, ice creams, etc.), sugar confectioneries (e.g., candies, nougats, gummies, marshmallows, chewing gums, chocolates, etc.), patisseries (e.g., cakes, cookies, macaroons, jellies, puddings, Bavarian creams, etc.), snacks, and Japanese sweets (e.g., rice dumplings, rice crackers, doughnuts, sponge cakes, etc.); processed agricultural products such as dried vegetables and pickles; processed marine products such as boiled fish pastes; processed grain products such as noodles, cooked rice, and bread; seasonings; syrups, jams, and the like; and processed livestock meat products.

Examples of the perfumery and cosmetics described above include cosmetic products such as make-up products (e.g., eye shadow, mascara, lip stick, etc.), skin care products, hair care products (e.g., hair color, etc.), and oral care products (e.g., tooth paste, mouthwash, etc.) ; perfumes, lip balms, and bath fragrances.

Examples of the pharmaceuticals described above include tablets (e.g., sugar-coated tablets), granules, liquids, capsules, troches, and gargles.

Examples of the quasi drugs described above include nutritional supplements, various supplements, mouth deodorants, mouth refrigerants, hair growth stimulants, and hair restorers.

Examples of the commodities described above include pesticides, insecticides, dehumidifying agents, deodorants, and detergents.

Examples of the inks described above include dye inks and printing inks.

Examples of the animal feeds described above include pet foods such as cat foods, dog foods, and fish foods.

[Method for Producing Colored Composition]

In the invention, a water-soluble pigment or a water-soluble pigment-containing substance and an emulsified oil/fat can be added to a composition to produce a colored composition. As necessary, other components can be suitably added.

In the invention, a water-soluble pigment or a water-soluble pigment-containing substance and an emulsified oil/fat-containing preparation can be added to a composition to produce a colored composition.

In the invention, in addition, a pigment preparation can be added to a composition to produce a colored composition.

In the invention, the composition to be colored is not particularly limited, but a food composition is particularly preferable.

The step of coloring a composition can be performed in the usual manner for each composition.

In the invention, a water-soluble pigment or a water-soluble pigment-containing substance can be blended with an emulsified oil/fat (or an emulsified oil/fat-containing preparation) to produce a colored composition. In this case, the water-soluble pigment or water-soluble pigment-containing substance can be blended such that the water-soluble pigment content in the colored composition is 0.001 to 5 mass%, preferably 0.005 to 3 mass%, more preferably 0.01 to 1.5 mass%, and still more preferably 0.03 to 1 mass% in terms of a color value of 100.

In addition, the emulsified oil/fat content in the colored composition may follow the content relative to the water-soluble pigment described above. That is, in the colored composition, the emulsified oil/fat proportion per 100 parts by mass of the water-soluble pigment (in terms of a color value of 100) is, as the dry mass of the emulsified oil/fat, for example, within a range of 0.001 to 30 parts by mass, preferably within a range of 0.005 to 25 parts by mass, and more preferably within a range of 0.01 to 20 parts by mass.

In addition, in the colored composition, the oil/fat proportion in the emulsified oil/fat per 100 parts by mass of the water-soluble pigment (in terms of a color value of 100) is within a range of 0.0005 to 15 parts by mass, for example, preferably within a range of 0.001 to 12 parts by mass, and more preferably within a range of 0.005 to 10 parts by mass.

In the case where the emulsified oil/fat is sprayed, the emulsified oil/fat concentration in an aqueous emulsified oil/fat solution (emulsified oil/fat suspension) sprayed relative to a colored composition is 0 .1 ppb to 5%, for example, preferably 0.5 ppb to 3%, and more preferably 1 ppb to 1%.

In the case where the emulsified oil/fat is sprayed, the oil/fat concentration in the emulsified oil/fat in an aqueous emulsified oil/fat solution (emulsified oil/fat suspension) sprayed relative to a colored composition is within a range of 0.1 ppb to 2%, for example, preferably 0.2 ppb to 1%.

In the invention, in addition, a pigment preparation can be added to a composition to produce a colored composition, and the blending proportion of the pigment preparation relative to each composition can be suitably adjusted according to the kind of composition or the purpose. For example, in one preferred embodiment of the invention, the pigment preparation can be blended such that the pigment preparation content in the composition is 0.001 to 5 mass%, preferably 0.005 to 3 mass%, more preferably 0.01 to 1.5 mass%, and still more preferably 0.03 to 1 mass% in terms of a color value of 100.

When each composition is colored using a naturally derived water-soluble pigment, in the case where the amount of water that dissolves the pigment is small, that is, in the case where the amount of naturally derived water-soluble pigment is large relative to water, foaming of the pigment tends to be even more notable.

For example, in the case where the naturally derived water-soluble pigment is dissolved such that the pigment concentration relative to water is 3 mass% or more, further 5 mass% or more, particularly 7 mass% or more, or especially 10 mass% or more in terms of a color value of 100, foaming is even more likely to occur. According to the method for producing a colored composition of the invention, in the step of coloring a composition, even in the case where the content of the naturally derived water-soluble pigment relative to water is 10 mass% or more in terms of a color value of 100, foaming of the pigment is suppressed, and, as a result, a colored composition can be efficiently produced. Incidentally, the concentration of the naturally derived water-soluble pigment in a colored composition described herein also applies to the case where a water-soluble pigment and an emulsified oil/fat are separately added, the case where a water-soluble pigment and an emulsified oil/fat-containing preparation are separately added, and also the case where a pigment preparation formed as a single component is added.

The upper limit of the concentration of the naturally derived water-soluble pigment relative to water is not particularly limited, and may be, for example, as the concentration relative to water in the aqueous solvent, 70 mass% or less, preferably 50 mass% or less, in terms of a color value of 200. Incidentally, the upper limit of the concentration of the naturally derived water-soluble pigment relative to water described herein also applies to the case where a water-soluble pigment and an emulsified oil/fat are separately added, the case where a water-soluble pigment and an emulsified oil/fat-containing preparation are separately added, and also the case where a pigment preparation formed as a single component is added.

The invention encompasses the following embodiments.

[1] A defoaming and/or foam suppression method for a naturally derived water-soluble pigment or a water-soluble pigment-containing substance,
the method comprising a step of bringing an emulsified oil/fat containing an emulsifier and an oil/fat into contact with the naturally derived water-soluble pigment or water-soluble pigment-containing substance.
[2] The defoaming and/or foam suppression method according to item 1, wherein the naturally derived water-soluble pigment is an algae- or plant-derived water-soluble pigment.
[3] The defoaming and/or foam suppression method according to item 1 or 2, wherein the naturally derived water-soluble pigment is at least one member selected from the group consisting of spirulina blue, anthocyanin-based pigments, gardenia pigments, and monascus pigments.
[4] The defoaming and/or foam suppression method according to any one of items 1 to 3, wherein the emulsifier is a polysaccharide.
[5] The defoaming and/or foam suppression method according to item 4, wherein the polysaccharide is gum arabic or gum ghatti.

[6] The defoaming and/or foam suppression method according to any one of items 1 to 5, wherein the oil/fat contains a lipophilic flavoring agent.

[7] A preparation comprising an emulsified oil/fat, for the defoaming and/or foam suppression of a naturally derived water-soluble pigment or a water-soluble pigment-containing substance.

[8] The preparation according to item 7, wherein the naturally derived water-soluble pigment is at least one member selected from the group consisting of spirulina blue, anthocyanin-based pigments, gardenia pigments, and monascus pigments.

[9] The preparation according to item 7 or 8, wherein the emulsified oil/fat contains a polysaccharide.

[10] The preparation according to item 9, wherein the polysaccharide is gum arabic or gum ghatti.

[11] The preparation according to any one of items 7 to 10, wherein the emulsified oil/fat contains a lipophilic flavoring agent.

[12] A pigment preparation comprising a naturally derived water-soluble pigment and an emulsified oil/fat.

[13] A pigment preparation, wherein the naturally derived water-soluble pigment is at least one member selected from the group consisting of spirulina blue, anthocyanin-based pigments, gardenia pigments, and monascus pigments.

[14] The pigment preparation according to item 12 or 13, wherein the emulsified oil/fat contains a polysaccharide.

[15] The pigment preparation according to item 14, wherein the polysaccharide is gum arabic or gum ghatti.

[16] The pigment preparation according to any one of items 12 to 15, wherein the emulsified oil/fat contains a lipophilic flavoring agent.

[17] A colored composition comprising spirulina blue, an oil, and an emulsifier.

[18] The colored composition according to item 17, wherein the emulsifier contains a polysaccharide.

[19] The colored composition according to item 18, wherein the polysaccharide is gum arabic or gum ghatti.

[20] A method for producing a colored composition containing a naturally derived water-soluble pigment,

the method comprising a step of mixing the pigment preparation according to any one of items 12 to 16 with a raw material.

Examples

Hereinafter, the invention will be described in further detail with reference to examples. However, the invention is not limited thereto.

(Test Example 1) Defoaming Effect Evaluation Test

<Spirulina Pigment Powder Used>

"LINABLUE-G1" (powder), manufactured by DIC Lifetech Co., Ltd., color value: 185
Breakdown: 40mass% of spirulina blue, 55 mass% of filler (trehalose), and 5 mass% of trisodium citrate.

<Emulsified Oil/Fat-Containing Preparation Used>

"SAN FIX NEOKURA NO. 1" (powder), manufactured by San-Ei Gen F.F.I., Inc.
Breakdown: 16 mass% of oil/fat (comprising 0.1 mass% of orange essential oil, remainder: medium-chain triglyceride), 13 mass% of gum arabic, 71 mass% of filler (dextrin) (the emulsified oil/fat content is 29 mass% of the entire preparation).
SAN FIX NEOKURA NO. 1 was dissolved in ion exchange water, and an aqueous solution containing each emulsified oil/fat composition was prepared and used.

<Procedure>

In a 50-mL beaker, 3 g of a spirulina pigment powder was weighed and dissolved in 27 mL of water. After dissolution, foaming was caused using a dropper such that the total amount of liquid and foam was about 50 mL (50-mL level on the scale on the beaker). An aqueous solution containing an emulsified oil/fat composition separately prepared was sprayed using an atomizer, and the defoaming effect after spraying was observed. The spraying amount of the atomizer was about 0.5 mL per puff. In addition, the amount of water-soluble pigment at the time of foam generation was 18.5% in terms of a color value of 100. ([185 (in terms of color value)/100 (product's color value)] x 10 (%) = 18.5%)

<Evaluation>

(1) As the foam reduction percentage, the percentage of foam reduction after spraying was determined from the foam heights before and after spraying. The foam height after spraying is not uniform. Thus, the foam was flattened by stirring so that the foam did not disappear.

$$\texttt{Foam reduction percentage = (foam height before spraying}$$

$$\texttt{- foam height after spraying)/foam height before spraying} \times$$

$$\texttt{100 (\%)}$$

(2) Defoaming Time

The time from the completion of spraying was measured, and the time until defoaming was measured. Here, the point when the foam stopped disappearing was defined as the end point. The results are shown in Table 2.

[Table 2]

| | Emulsified Oil/Fat Preparation Concentration | Oil/Fat Concentration | Gum Arabic Concentration | Before Spraying (cm) | After Spraying (cm) | Reduction Percentage (%) | Retention Time |
|---|---|---|---|---|---|---|---|
| Example 1 | 1% | 0.16% | 0.13% | 1.9 | 1.0 | 47.4 | 6 min 30 sec |
| Example 2 | 0.1% | 0.016% | 0.013% | 2.1 | 0.7 | 66.7 | 7 min |
| Example 3 | 0.01% | 16 ppm | 13 ppm | 2 | 1.1 | 45.0 | 7 min 10 sec |
| Example 4 | 10 ppm | 1.6 ppm | 1.3 ppm | 2.2 | 1.3 | 40.9 | 8 min 30 sec |
| Example 5 | 0.1 ppm | 0.016 ppm | 0.013 ppm | 2.3 | 1.2 | 47.6 | 8 min |
| Example 6 | 0.01 ppm | 0.0016 ppm | 0.0013 ppm | 2.5 | 1.3 | 48.0 | 6 min 20 sec |
| Comparative Example 1 | water | 0% | 0% | 2.3 | 1.8 | 21.7 | 3 min 30 sec |

As is clear from Table 2, it turned out that the emulsified oil/fat-containing preparations of Examples 1 to 6 have an excellent defoaming effect on a water-soluble pigment-containing substance over a wide range of concentrations.

(Test Example 2) Foam Suppression Effect Evaluation Test

<Spirulina Pigment Powder Used>

"LINABLUE-G1" (powder), manufactured by DIC Lifetech Co. , Ltd., color value: 185
Breakdown: 40 mass% of spirulina blue, 55 mass% of filler (trehalose), and 5 mass% of trisodium citrate.

<Emulsified Oil/Fat-Containing Preparation Used>

"NEOKURA NO. 36303" (liquid product), manufactured by San-Ei Gen F.F.I., Inc.
Breakdown: 7 mass% of oil/fat (including 0.05 mass% of orange essential oil, remainder: medium-chain triglyceride), 6 mass% of sucrose fatty acid ester, 23 mass% of gum arabic (the emulsified oil/fat content is 36 mass% of the entire preparation)
"NEOKURA No. NB-8" (liquid product), manufactured by San-Ei Gen F.F.I., Inc.
Breakdown: 6 mass% of oil/fat (including 0.3 mass% of orange essential oil, remainder: medium-chain triglyceride), 5 mass% of sucrose fatty acid ester, 23 mass% of gum arabic (the emulsified oil/fat content is 34 mass% of the entire preparation)

<Procedure>

Each emulsifier or emulsified oil/fat preparation shown in Table 3 and a 1 mass% aqueous solution of a spirulina pigment powder were placed in a 50-mL measuring cylinder to 10 mL and shaken for 1 minute. The amount of water-soluble pigment at the time of foam generation was 1.85 mass% in terms of a color value of 100.

<Evaluation>

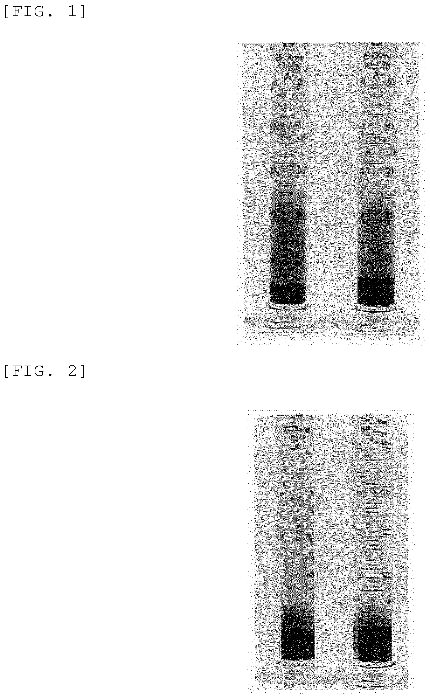

The amounts of liquid and foam were compared between immediately after shaking and after 1-minute standing, and the effect of each composition was evaluated. The results are shown in Table 3.
In addition, Fig. 1 and Fig. 2 show the appearance before and after the test in Comparative Example 2 (Control) and Example 7. Here, Fig. 1 is a photograph showing the conditions immediately after shaking (left) and after 1-minute standing (right) in Comparative Example 2, while Fig. 2 is a photograph showing the conditions immediately after shaking (left) and after 1-minute standing (right) in Example 7.

[Table 3]

| | Composition | Amount of Emulsified Oil/Fat Preparation Added (%) | Oil/ Fat Amount (ppm) | Emulsifler Amount (ppm) | Immediately After Shaking | | After 1-Minute Standing | |
|---|---|---|---|---|---|---|---|---|
| | | | | | Liquid (mL) | Foam (mL) | Liquid (mL) | Foam (mL) |
| Example 7 | NEOKURA NO. 36303 | 0.05% | 35 ppm | Arabic 115 ppm Sucrose fatty acid ester 30 ppm | 8 | 7 | 9 | 6 |
| Example 8 | NEOKURA NB-8 | 0.05% | 30 ppm | Arabic 115 ppm Sucrose fatty acid ester 25 ppm | 4 . 5 | 13 | 8 | 10 |
| Comparative Example 2 (Control) | Not added | 0% | 0 | 0 | 5 | 17 | 7.5 | 14.5 |
| Comparative Example 3 | Sucrose fatty acid ester | 0.01% | 0 | 100 ppm | 5.5 | 22.5 | 7 . 5 | 20 |

(continued)

|  | Composition | Amount of Emulsified Oil/ Fat Preparation Added (%) | Oil/ Fat Amount (ppm) | Emulsifier Amount (ppm) | Immediately After Shaking | | After 1-Minute Standing | |
|---|---|---|---|---|---|---|---|---|
|  |  |  |  |  | Liquid (mL) | Foam (mL) | Liquid (mL) | Foam (mL) |
| Comparative Example 4 | Gum Arabic | 0.01% | 0 | 100 ppm | 4 | 18 | 7.5 | 14.5 |

As is clear from Table 3, it turned out that the emulsified oil/fat-containing preparations of Examples 7 and 8 had an excellent foam suppression effect on a water-soluble pigment-containing substance. In addition, also from Fig. 1 and Fig. 2, the excellent foam suppression effect of the emulsified oil/fat-containing preparation of the invention can be seen.

In addition, it was confirmed that the excellent foam suppression effect of the invention was not the effect of an emulsifier alone (Comparative Examples 3 and 4), but was a special effect caused by the addition in an emulsified oil/fat form.

(Test Example 3) Foam Suppression Effect Evaluation Test

<Spirulina Pigment Powder Used>

"LINABLUE-G1" (powder), manufactured by DIC Lifetech Co., Ltd., color value: 185
Breakdown: 40mass% of spirulina blue, 55 mass% of filler (trehalose), and 5 mass% of trisodium citrate.

<Emulsified Oil/Fat-Containing Preparation Used>

"SAN FIX NEOKURA NO. 1" (powder), manufactured by San-Ei Gen F.F.I., Inc.

Breakdown: 16 mass% of oil/fat (comprising 0.1 mass% of orange essential oil, remainder: medium-chain triglyceride), 13 mass% of gum arabic, 71 mass% of filler (dextrin) (the emulsified oil/fat content is 29 mass% of the entire preparation).

<Procedure>

The emulsified oil/fat shown in Table 4 and a 1% aqueous solution of a spirulina pigment powder were placed in a 50-mL measuring cylinder to 10 mL and shaken for 1 minute. The amount of water-soluble pigment at the time of foam generation was 1.85% in terms of a color value of 100.

<Evaluation>

The amounts of liquid and foam immediately after shaking were compared, and the effect of each composition was evaluated. The results are shown in Table 4.

[Table 4]

|  | Amount of Emulsified Oil/ Fat Preparation Added (%) | Oil/ Fat Amount (ppm) | Emulsifier Amount (ppm) | Immediately After Shaking | | Foam Reduction Percentage Compared to No-Addition (%) |
|---|---|---|---|---|---|---|
|  |  |  |  | Liquid (ml) | Foam (ml) |  |
| Comparative Example 5 (Control) | 0 | 0 | 0 | 5 | 17 | - |
| Example 9 | 0.05 | 80 | 65 | 9 | 2 | 88 |
| Example 10 | 0.01 | 16 | 13 | 8.5 | 3.5 | 79 |
| Example 11 | 0.005 | 8 | 6.5 | 8 | 4.5 | 74 |

(continued)

|  | Amount of Emulsified Oil/ Fat Preparation Added (%) | Oil/ Fat Amount (ppm) | Emulsifier Amount (ppm) | Immediately After Shaking | | Foam Reduction Percentage Compared to No-Addition (%) |
|---|---|---|---|---|---|---|
|  |  |  |  | Liquid (ml) | Foam (ml) |  |
| Example 12 | 0.001 | 1.6 | 1.3 | 45 | 10 | 41 |

As is clear from Table 4, it turned out that the emulsified oil/fat-containing preparations of the examples had an excellent foam suppression effect on a water-soluble pigment-containing substance over a wide range of concentrations.

(Test Example 4) Foam Suppression Effect Evaluation Test

<Spirulina Pigment Powder Used>

"LINABLUE-G1" (powder), manufactured by DIC LifetechCo., Ltd., color value: 185
Breakdown: 40mass% of spirulina blue, 55 mass% of filler (trehalose), and 5 mass% of trisodium citrate.

<Emulsified Oil/Fat-Containing Preparation Used>

"SAN FIX NEOKURA NO. 1" (powder) , manufactured by San-Ei Gen F.F.I., Inc.
Breakdown: 16 mass% of oil/fat (including 0.1 mass% of orange essential oil, remainder: medium-chain triglyceride), 13 mass% of gum arabic, 71 mass% of filler (dextrin) (the emulsified oil/fat content is 29 mass% of the entire preparation).

<Procedure>

19.9 parts by mass of a spirulina pigment powder and 0.1 parts by mass of an emulsified oil/fat-containing preparation were mixed in powder to prepare a powder pigment preparation. The pigment preparation was dissolved in ion exchange water to prepare a 1% aqueous solution of the pigment preparation.
10 mL of the aqueous pigment solution was placed in a 50-mL measuring cylinder and shaken for 1 minute. The amount of water-soluble pigment at the time of foam generation was 1.85% in terms of a color value of 100.

<Evaluation>

The amounts of liquid and foam immediately after shaking were compared, and the foam suppression effect was evaluated. The results are shown in Table 5.

[Table 5]

| | Amount of Emulsified Oil/Fat Preparation Added (%) | oil/ Fat Amount (ppm) | Emulsifier Amount (ppm) | Immediately After Shaking | | | After 1-Minute Standing | | |
|---|---|---|---|---|---|---|---|---|---|
| | | | | Liquid (ml) | Foam (ml) | Foam Reduction Percentage Compared to No-Addition (%) | Liquid (ml) | Foam (ml) | Foam Reduction Percentage Compared to No-Addition (%) |
| Comparative Example 6 | 0 | 0 | 0 | 5 | 17 | - | 7.5 | 14.5 | - |
| Example 13 | 0.005 | 8 | 6.5 | 8.5 | 4.5 | 74 | 9 | 3.5 | 79 |

As is clear from Table 5, it was understood that the pigment preparation of the example was a pigment preparation in which foaming was significantly suppressed.

(Test Example 5) Foam Suppression Effect Evaluation Test

<Spirulina Pigment Powder Used>

"LINABLUE-G1" (powder), manufactured by DIC Lifetech Co. , Ltd., color value: 185
Breakdown: 40 mass% of spirulina blue, 55 mass% of filler (trehalose), and 5 mass% of trisodium citrate.

<Purple Sweet Potato Pigment Preparation Used>

"SAN RED YMF" (liquid), manufactured by San-Ei Gen F. F. I. , Inc., color value: 80
Breakdown: 68 mass% of purple sweet potato pigment, 20 mass% of ethanol, 2 mass% of citric acid (crystals), and 10 mass% of dextrin

<Emulsified Oil/Fat-Containing Preparation Used 1 (Liquid)>

8.6 mass% of oil/fat (vegetable oil/fat), 4 mass% of gum ghatti, remainder: water

<Emulsified Oil/Fat-Containing Preparation Used 2 (Liquid)>

Breakdown: 5 mass% of oil/fat (vegetable oil/fat, etc.), 5 mass% of glycerine fatty acid ester, 0.4 mass% of lecithin, 68 mass% of glycerin, 21.6 mass% of water

<Emulsified Oil/Fat-Containing Preparation Used 3 (Powder)>

Breakdown: 16 mass% of oil/fat (medium-chain triglyceride), 13 mass% of gum arabic, 71 mass% of filler (dextrin) (the emulsified oil/fat content is 29 mass% of the entire preparation).

<Procedure>

Each emulsified oil/fat preparation shown in Table 6 and a 1% aqueous solution of a spirulina pigment powder were placed in a 50-mL measuring cylinder to 10 mL and shaken for 1 minute.
In Comparative Examples 8 and 9, glycerin was added instead of an emulsified oil/fat preparation and examined.
The amount of spirulina blue at the time of foam generation was 1.85% in terms of a color value of 100.
In Example 16, an emulsified oil/fat preparation and a 1% aqueous solution of purple sweet potato pigment were placed in a 50-mL measuring cylinder to 10 mL and shaken for 1 minute.
The amount of purple sweet potato pigment at the time of foam generation was 0.8% in terms of a color value of 100.

<Evaluation>

The amounts of liquid and foam immediately after shaking were compared, and the foam suppression effect was evaluated. The results are shown in Table 6.

[Table 6]

| | Pigment | Emulsified Oil/ Fat Preparation | | Oil/Fat Amount (ppm) | Emulsifier Amount (ppm) | Immediately After Shaking | | After 1-Minute Standing | |
| --- | --- | --- | --- | --- | --- | --- | --- | --- | --- |
| | | Kind | Amount added (mass%) | | | Liquid (ml) | Foam (ml) | Liquid (ml) | Foam (ml) |
| Example 14 | Spirulina blue | Preparation 1 | 0.05 | 43 | 20 | 9.0 | 2.5 | 9.5 | 2.0 |
| Example 15 | Spirulina blue | Preparation 2 | 0.5 | 250 | 270 | 6.5 | 12.5 | 8.5 | 9.0 |
| Comparative Example 7 | Spirulina blue | - | 0 | 0 | 0 | 5 | 17 | 7.5 | 14.5 |
| Comparative Example 8 | Spirulina blue | (Alternative) Glycerin | 0.01 | 0 | 0 | 3.5 | 19.0 | 6.5 | 15.5 |
| Comparative Example 9 | Spirulina blue | (Alternative) Glycerin | 0.3 | 0 | 0 | 3.5 | 19.0 | 7.0 | 14.5 |
| Example 16 | Purple sweet potato pigment | Preparation 3 | 0.05 | 80 | 65 | 10.0 | 0.5 | 10 | 0 |
| Comparative Example 10 | Purple sweet potato pigment | - | - | 0 | 0 | 8.5 | 6.0 | 10 | 2.5 |

As is clear from Table 6, it turned out that the emulsified oil/fat-containing preparations of the examples had an excellent foam suppression effect regardless of the kind of oil/fat.

(Test Example 6) Foam Suppression Effect Evaluation Test

<Spirulina Pigment Powder Used>

"LINABLUE-G1" (powder), manufactured by DIC LifetechCo., Ltd., color value: 185
Breakdown: 40mass% of spirulina blue, 55 mass% of filler (trehalose), and 5 mass% of trisodium citrate.

<Emulsified Oil/Fat-Containing Preparation Used (Powder)>

16 mass% of oil/fat (medium-chain triglyceride), 13 mass% of gum arabic, 71 mass% of filler (dextrin)

<Procedure>

As shown in Table 7, a pigment powder and an emulsified oil/fat-containing preparation were mixed to prepare 10 g of a powder pigment preparation. In a 30-mL volume screw tube, the pigment preparation was dissolved in ion exchange water to a spirulina pigment powder concentration of 30%, thereby preparing a pigment solution (ion exchange water was added to the pigment preparation amount shown in Table 7 to make a total of 10 g). The solution was hand-stirred using a medicine spoon until complete dissolution. Foaming that occurred at that time was evaluated based on the foam percentage calculated as follows.

$$\text{(Foam percentage)} = \text{foam part (height from the liquid surface to the top of foam)/liquid part (height from the screw tube bottom surface to the liquid surface)} \times 100 \ (\%)$$

A lower foam percentage means that foaming has been more suppressed.
In this test example, the amount of water-soluble pigment at the time of foam generation was 55.5% in terms of a color value of 100.

[Table 7]

| | Spirulina Pigment Powder (g) | Emulsified Oil/Fat Preparation (g) | Pigment Preparation Amount in 10mL (g) | Amount of Emulsified Oil/Fat Preparation Added {%} | Oil/Fat Amount (%) | Emulsifier Amount (%) | Liquid Part (cm) | Foam Part (cm) | Foam Percentage (%) |
|---|---|---|---|---|---|---|---|---|---|
| Comparative Example 11 | 10 | 0 | 3 | 0 | 0 | 0 | 1.4 | 0.9 | 64.3 |
| Example 17 | 9 | 1 | 3.3 | 3.3 | 0.5 | 0.4 | 1.4 | 0.7 | 50 |
| Example 18 | 8 | 2 | 3.75 | 7.5 | 1.2 | 1.0 | 1.4 | 0.6 | 42.9 |
| Example 19 | 7 | 3 | 4.3 | 12.9 | 2.1 | 1.7 | 1.5 | 0.6 | 40 |
| Example 20 | 6 | 4 | 5 | 20 | 3.2 | 2.6 | 1.3 | 0.5 | 38.5 |
| Example 21 | 5 | 5 | 6 | 30 | 4.8 | 3.9 | 1.4 | 0.4 | 28.6 |

EP 3 693 415 A1

As is clear from Table 7, it turned out that the emulsified oil/fat-containing preparations of the examples had an excellent foam suppression effect on a water-soluble pigment-containing substance over a wide range of concentrations.

**Claims**

1. A defoaming and/or foam suppression method for a naturally derived water-soluble pigment or a water-soluble pigment-containing substance,
the method comprising a step of bringing an emulsified oil/fat containing an emulsifier and an oil/fat into contact with the naturally derived water-soluble pigment or water-soluble pigment-containing substance.

2. The defoaming and/or foam suppression method according to claim 1, wherein the naturally derived water-soluble pigment is an algae- or plant-derived water-soluble pigment.

3. The defoaming and/or foam suppression method according to claim 1 or 2, wherein the naturally derived water-soluble pigment is at least one member selected from the group consisting of spirulina blue, anthocyanin-based pigments, gardenia pigments, and monascus pigments.

4. The defoaming and/or foam suppression method according to any one of claims 1 to 3, wherein the emulsifier is a polysaccharide.

5. The defoaming and/or foam suppression method according to any one of claims 1 to 4, wherein the oil/fat contains a lipophilic flavoring agent.

6. A preparation comprising an emulsified oil/fat, for the defoaming and/or foam suppression of a naturally derived water-soluble pigment or a water-soluble pigment-containing substance.

7. The preparation according to claim 6, wherein the emulsified oil/fat contains a polysaccharide.

8. The preparation according to claim 6 or 7, wherein the emulsified oil/fat contains a lipophilic flavoring agent.

9. A pigment preparation comprising a naturally derived water-soluble pigment and an emulsified oil/fat.

10. The pigment preparation according to claim 9, wherein the emulsified oil/fat contains a polysaccharide.

11. The pigment preparation according to claim 9 or 10, wherein the emulsified oil/fat contains a lipophilic flavoring agent.

12. A colored composition comprising a spirulina-derived pigment, an oil, and an emulsifier.

13. A method for producing a colored composition containing a naturally derived water-soluble pigment,
the method comprising a step of mixing the pigment preparation according to any one of claims 9 to 11 with a raw material.

[FIG. 1]

[FIG. 2]

## INTERNATIONAL SEARCH REPORT

| | International application No. |
|---|---|
| | PCT/JP2018/037073 |

**A. CLASSIFICATION OF SUBJECT MATTER**
Int.Cl. C09B61/00(2006.01)i, B01D19/02(2006.01)i, B01D19/04(2006.01)i, C09B67/20(2006.01)i

According to International Patent Classification (IPC) or to both national classification and IPC

**B. FIELDS SEARCHED**

Minimum documentation searched (classification system followed by classification symbols)
Int.Cl. B01D19/00, C09B61/00, C09B67/20

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2012-51114 A (UNION CHEMICAR CO., LTD.) 15 March 2012, paragraphs [0023], [0034], [0038] (Family: none) | 9-11, 13<br>12<br>1-8 |
| Y<br>A | WO 2014/203524 A1 (TOPPAN PRINTING CO., LTD.) 24 December 2014, paragraph [0017] (Family: none) | 12<br>1-11, 13 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14.11.2018 | 27.11.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/037073

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2004-203952 A (DAINIPPON INK & CHEM INC.) 22 July 2004, paragraph [0009]<br>(Family: none) | 12<br>1-11, 13 |
| A | JP 2008-143992 A (TOYO INK CO., LTD.) 26 June 2008, claims, examples 2, 3, comparative example 1<br>(Family: none) | 1-13 |
| A | JP 2005-320528 A (NIPPON SYSTEM KIKI KK) 17 November 2005, claims, paragraph [0087]<br>(Family: none) | 1-13 |
| A | JP 1-210005 A (BASF AG) 23 August 1989, claims<br>& US 4976888 A, claims | 1-13 |
| A | JP 2013-121581 A (SAN NOPCO LTD.) 20 June 2013, claims<br>(Family: none) | 1-13 |
| A | JP 62-1414 A (CIBA GEIGY AG) 07 January 1987, claims<br>& US 4767568 A, claims | 1-13 |
| A | JP 63-91106 A (CIBA GEIGY AG) 21 April 1988, claims<br>& US 4880564 A, claims | 1-13 |
| A | JP 2-207770 A (KANEBO LIMITED) 17 August 1990, claims, tables<br>(Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004231851 A

- JP 2011099105 A

**Non-patent literature cited in the description**

- 17. Color Value Measurement Method'' in ''B. GENERAL TEST'' and also ''C. MONOGRAPHS. Japan's Specifications and Standards for Food Additives

- C. MONOGRAPHS. Japan's Specifications and Standards for Food Additives
- C. MONOGRAPHS. Japan' s Specifications and Standards for Food Additives